# FASCICULE DE BREVET EUROPEEN

(11) **EP 3 947 160 B1**
(45) Date de publication et mention de la délivrance du brevet: **07.06.2023**
(21) Numéro de dépôt: 21710025.4
(22) Date de dépôt: 09.02.2021
(51) Int. Cl.: B64G 1/50

(54) **SATELLITE GÉOSTATIONNAIRE COMPRENANT UN RADIATEUR À ENSOLEILLEMENT RÉDUIT ET SYSTÈME DE GUIDAGE AMÉLIORÉ**
GEOSTATIONÄRER SATELLIT UMFASSEND EINEN STRAHLER MIT VERMINDERTER SONNENEINSTRAHLUNG UND VERBESSERTEM FÜHRUNGSSYSTEM
GEOSTATIONARY SATELLITE COMPRISING A RADIATOR WITH REDUCED INSOLATION AND IMPROVED GUIDANCE SYSTEM

(30) Priorité: 27.02.2020 FR 2001967
(43) Date de publication de la demande: 09.02.2022
(73) Titulaire: Airbus Defence and Space SAS, 31402 Toulouse Cedex 4 (FR)
(72) Inventeur: PUPILLE, Gilles, 31402 Toulouse Cedex 4 (FR); DELTOUR, Bernard, 31402 Toulouse Cedex 4 (FR)
(74) Mandataire: Plasseraud IP
(86) Numéro de dépôt international: PCT/FR2021/050229
(87) Numéro de publication internationale: WO 2021/170931

(56) Documents cités:
- EP-B1- 3 055 212
- FR-A1- 3 006 298
- RU-C1- 2 684 229

## Description

### Domaine technique

La présente demande concerne le domaine des satellites en orbite géostationnaire, par exemple de satellites de télécommunication. La présente demande concerne en particulier un radiateur pour un tel satellite et un satellite équipé d'un radiateur

### Technique antérieure

Un satellite géostationnaire se présente typiquement sous la forme d'un parallélépipède rectangle, sur lequel sont définies une face nord, une face sud, une face est, une face ouest, une face orientée vers la Terre et une face opposée, appelée anti-terre. Les faces nord, sud, est et ouest sont nommées ainsi en correspondance avec les points cardinaux de la planète autour de laquelle le satellite est placé. Ces orientations peuvent être quelque peu biaisées par rapport à leur définition pour répondre à certaines contraintes opérationnelles ou d'aménagement.

Une contrainte forte sur un satellite concerne le contrôle thermique des différents constituants et la dissipation de la puissance calorifique générée par ces constituants. La chaleur est évacuée du satellite par radiation, au moyen d'un ou plusieurs radiateurs. Un radiateur se présente généralement sous la forme d'un panneau dont une ou les deux faces principales forment les surfaces radiatives. Des conduits de fluide caloporteur relient en circuit fermé les équipements du satellite produisant de la chaleur et les surfaces radiatives, de sorte que le fluide caloporteur se réchauffe à proximité des équipements de satellite, et circule vers les surfaces radiatives pour y être refroidi avant de circuler à nouveau vers les équipements du satellite.

Afin de maximiser l'efficacité du radiateur en termes de réjection thermique, il est nécessaire que le radiateur soit soumis le moins possible au rayonnement solaire, également appelé ensoleillement.

A cet égard, on connaît du brevet EP 3 055 212 B1 accordé à la Demanderesse un radiateur pour un satellite géostationnaire dont l'ensoleillement est minimisé.

Pour cela, le radiateur comprend un pied de support d'un panneau radiatif comprenant au moins une surface radiative, le pied support étant monté rotatif autour d'un axe de rotation, et la surface radiative s'étendant perpendiculairement à un axe de radiation qui est incliné par rapport à l'axe de rotation du pied d'un angle de fonctionnement fixe correspondant à l'angle d'inclinaison du plan de l'orbite du satellite, à savoir pour la Terre un angle d'environ 23,5°.

En outre, le radiateur est piloté de sorte que pour toute rotation du pied support autour de l'axe de rotation, la surface radiative demeure parallèle au plan de l'écliptique.

De la sorte, l'inclinaison fixe de la surface radiative assure un ensoleillement nul de la surface radiative, augmentant l'efficacité du radiateur pour refroidir le satellite.

De plus ce brevet prévoit aussi, afin de limiter l'encombrement lié au panneau, notamment pour les autres équipements du satellite, que le panneau est monté pivotant autour de l'axe de radiation, et que le radiateur comprend en outre un système de guidage du panneau, empêchant au panneau de pivoter avec le pied support autour de l'axe de rotation. Ceci permet de maintenir le panneau dans une orientation donnée par rapport au satellite, tout en maintenant la ou les surfaces radiatives à une inclinaison constante minimisant l'ensoleillement du satellite.

En l'espèce, le système de guidage du panneau est formé par une tige formant un rail de guidage, fixée rigidement sur une face du satellite, et s'étendant parallèlement à l'axe de rotation, et d'une pince fixée au panneau, et coopérant avec le rail de guidage en l'enserrant de part et d'autre selon deux directions opposées. En fonction de la rotation du pied support, la pince peut glisser le long du rail tout en empêchant une rotation du panneau par rapport au satellite.

Un inconvénient de ce mécanisme de guidage est lié aux problèmes récurrents de tribologie des mécanismes spatiaux fonctionnant sous vide, c'est-à-dire de frottements et d'usure pouvant mener les mécanismes à une usure précoce et des dysfonctionnements importants. De plus, cette solution ne permet pas d'installer facilement un système de compensation des jeux et de précharge qui sont cependant nécessaires pour atteindre des performances de rigidité requises.

### Résumé

L'invention a pour but d'améliorer la solution décrite ci-avant.

En particulier, un but de l'invention est de proposer un radiateur à ensoleillement minimal, ne présentant pas de risque d'usure prématurée et répondant aux exigences de rigidité.

A cet égard, l'invention propose un satellite apte à être mis à poste en orbite géostationnaire autour d'une planète dans un plan incliné par rapport au plan de l'écliptique, comprenant un radiateur, le radiateur comprenant :
- au moins un panneau présentant au moins une surface radiative s'étendant perpendiculairement par rapport à un axe de radiation, le panneau étant monté pivotant par rapport audit axe de radiation,
- un pied support portant le panneau, et
- un moteur adapté pour faire pivoter le pied support autour d'un axe de rotation,

dans lequel l'axe de radiation et l'axe de rotation sont inclinés l'un par rapport à l'autre d'un angle de fonctionnement correspondant à l'angle d'inclinaison du plan de l'orbite du satellite par rapport au plan de l'écliptique, de sorte que pour toute rotation du pied support autour de l'axe de rotation, la surface radiative demeure parallèle au plan de l'écliptique,
et dans lequel le radiateur comprend en outre un système de guidage du panneau limitant la rotation du panneau autour de l'axe de rotation, de manière à maintenir le panneau dans une orientation donnée par rapport au satellite,
caractérisé en ce que le système de guidage du panneau comprend un bras de liaison du panneau au satellite monté pivotant par rapport au satellite autour d'un premier axe, et monté pivotant par rapport au panneau autour d'un second axe concourant au premier axe au niveau d'un point de concours confondu avec un point d'intersection entre l'axe de radiation et l'axe de rotation.

Avantageusement, mais facultativement, le satelilte selon l'invention comprend en outre au moins l'une des caractéristiques suivantes.

Le bras de liaison peut comprendre à chaque extrémité un palier s'étendant respectivement autour du premier axe et du second axe.

Dans un mode de réalisation, le premier axe et le second axe peuvent être perpendiculaires, et le bras de liaison est un bras coudé comprenant deux portions perpendiculaires entre elles.

Dans un mode de réalisation, le premier axe peut s'étendre parallèlement à une face support du satellite sur laquelle est monté le radiateur.

Le premier axe peut être perpendiculaire à l'axe de rotation.

Dans un mode de réalisation, le panneau présente une forme sensiblement rectangulaire présentant une dimension principale dans une première direction, et le second axe de rotation du bras de liaison par rapport au panneau est parallèle à la première direction.

Le radiateur peut comprendre en outre un circuit de circulation de fluide caloporteur adapté pour faire circuler un fluide caloporteur en boucle fermée entre un équipement du satellite et le panneau du radiateur, dans lequel le circuit de circulation de fluide caloporteur comprend au moins un premier conduit de fluide caloporteur comprenant au moins :
- une première portion souple s'étendant transversalement au premier axe de rotation de sorte à pouvoir fléchir autour d'un premier point de flexion situé sur le premier axe de rotation, et
- une deuxième portion souple s'étendant transversalement au second axe de rotation de sorte à pouvoir fléchir autour d'un deuxième point de flexion situé sur le deuxième axe de rotation.

Chaque conduit de fluide caloporteur comprend en outre des portions rigides s'étendant de part et d'autre de chaque portion souple. En variante, chaque conduit de fluide caloporteur peut comprendre une portion souple continue comprenant la première portion souple, la deuxième portion souple, et une portion souple intermédiaire reliant celles-ci.

Le bras de liaison peut également comprendre un support d'au moins un conduit de fluide caloporteur.

Dans un mode de réalisation, le radiateur comprend une pluralité de conduits de fluide caloporteur, chaque conduit comprenant une première et une deuxième portions souples, dans lequel les premières portions souples d'au moins deux conduits sont juxtaposées les unes aux autres transversalement au premier axe de rotation, et les deuxièmes portions souples d'au moins deux conduits sont juxtaposées les unes aux autres transversalement au deuxième axe de rotation.

Dans un mode de réalisation, le radiateur comprend en outre au moins un deuxième conduit de fluide caloporteur, superposé au premier conduit dans une direction perpendiculaire à un plan défini par le premier et le deuxième axe de rotation, le deuxième conduit comprenant une portion souple continue superposée à la première portion souple, la deuxième portion souple du deuxième conduit, et une portion intermédiaire reliant celles-ci du premier conduit.

Dans un mode de réalisation, le pied support peut comprendre deux portions à savoir :
- une première portion apte à être montée sur la face support du satellite, et
- une seconde portion sur laquelle le panneau est monté,
le panneau étant monté sur la seconde portion par l'intermédiaire d'un palier pour autoriser la rotation du panneau autour de l'axe de radiation.

Les deux portions du pied support peuvent être rectilignes, la première portion s'étendant selon l'axe de rotation et la deuxième portion s'étendant selon l'axe de radiation.

Dans des modes de réalisation, l'angle de fonctionnement est de 23,5°.

Dans des modes de réalisation, le radiateur est monté sur une face support du satellite, le pied support du radiateur étant fixé sur le satellite de sorte que l'axe de rotation est perpendiculaire à une face de référence du satellite, la face de référence étant une face nord ou une face sud du satellite.

Le radiateur décrit dans la présente comprend un système de guidage du panneau basé sur un bras de liaison assemblé respectivement au satellite et au panneau par deux liaisons rotatives. Ces liaisons rotatives, réalisables par exemple par des paliers, suppriment les problèmes liés au frottement et à l'usure prématurée des pièces. De plus, ces liaisons rotatives confèrent au système de guidage une grande simplicité et un faible coût de réalisation.

Dans des paliers, la suppression des jeux et la précharge sont maîtrisés et permettent de répondre simplement et sans pièce supplémentaire aux exigences de rigidité du mécanisme.

### Brève description des dessins

D'autres caractéristiques, détails et avantages apparaîtront à la lecture de la description détaillée ci-après, et à l'analyse des dessins annexés, sur lesquels :
**Fig. 1a**

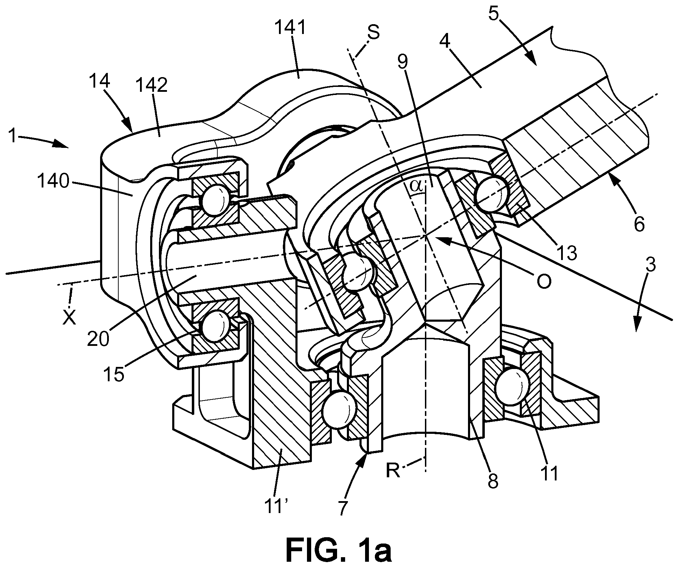

   [Fig. 1a] est une vue schématique en coupe d'un radiateur monté sur une face d'un satellite, selon un exemple de réalisation
**Fig. 1b**

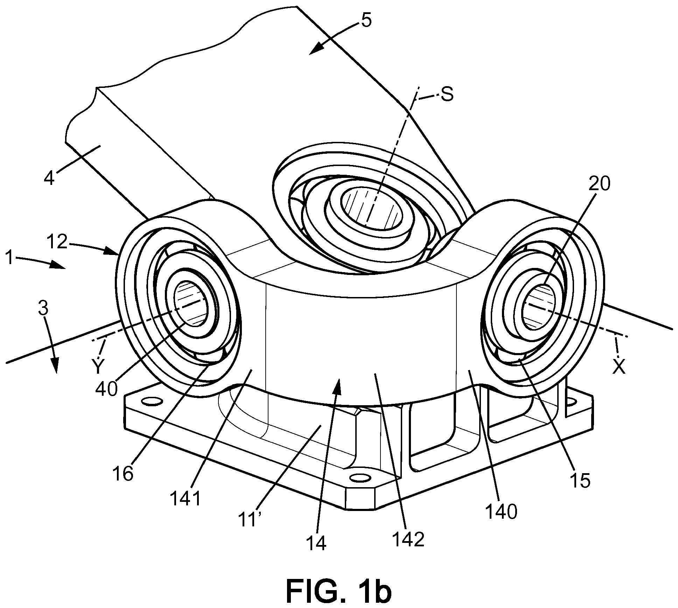

   [Fig. 1b] représente une vue schématique d'un radiateur monté sur une face d'un satellite, selon un exemple de réalisation.
**Fig. 2**

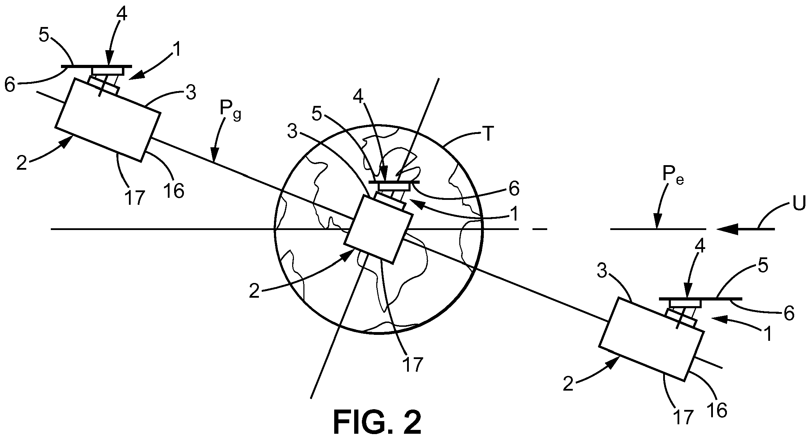

   [Fig. 2] est une représentation schématique d'un satellite muni d'un radiateur selon un mode de réalisation de l'invention, en orbite autour de la Terre, le satellite étant représenté pour trois positions différentes autour de la planète.
**Fig. 3a**

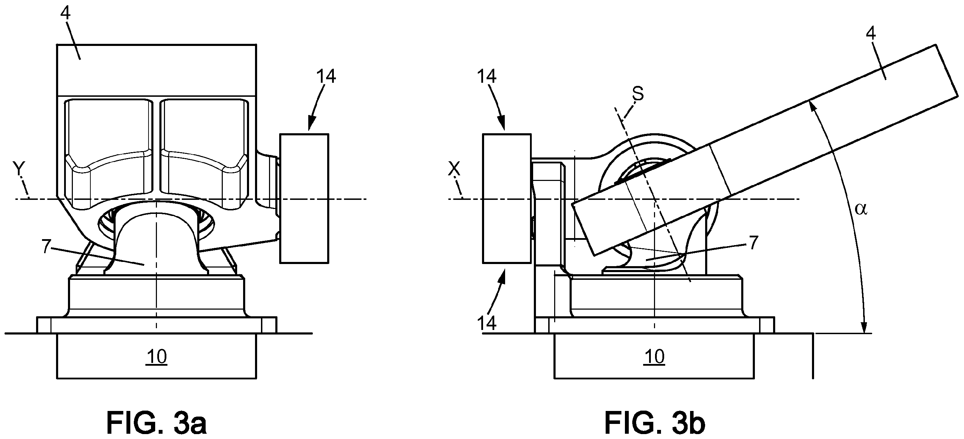

   [Fig. 3a] représente une vue du radiateur dans l'une des positions de la figure 2.
**Fig. 3b**
   . [Fig. 3b] représente une vue selon un plan perpendiculaire à celui de la figure 3a.
**Fig. 4a**

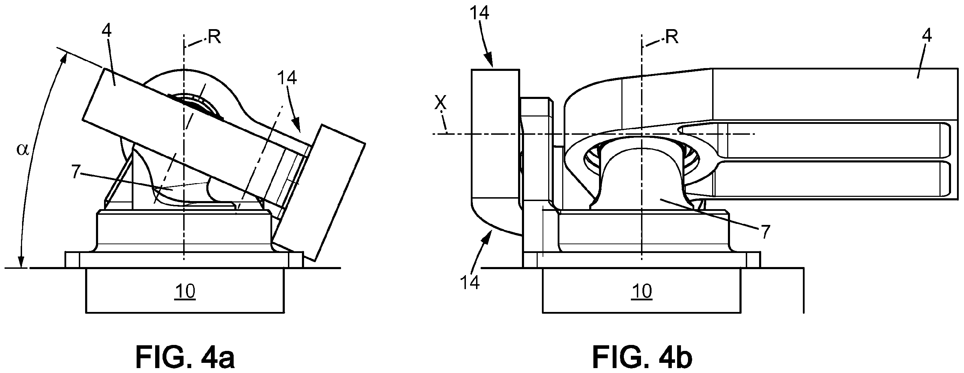

   [Fig. 4a] représente une vue du radiateur dans une deuxième position de la figure 2.
**Fig. 4b**
   [Fig. 4b] représente une vue selon un plan perpendiculaire à celui de la figure 4a.
**Fig. 5a**

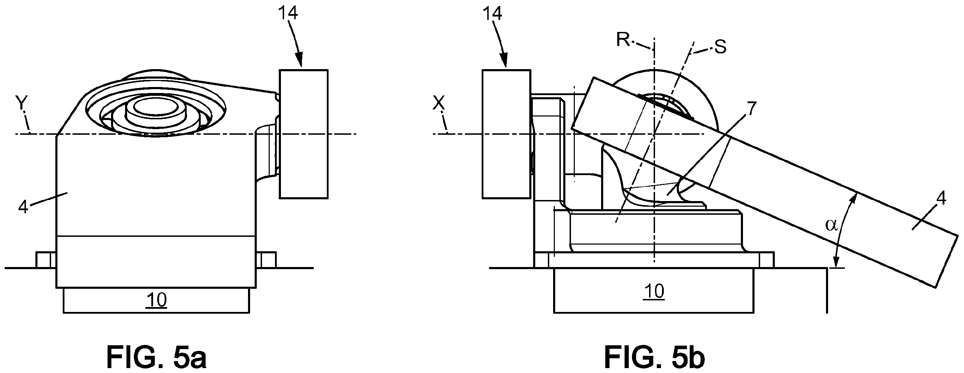

   [Fig. 5a] représente une vue du radiateur dans une troisième position.
**Fig. 5b**
   [Fig. 5b] représente une vue selon un plan perpendiculaire à celui de la figure 5a.
**Fig. 6a**

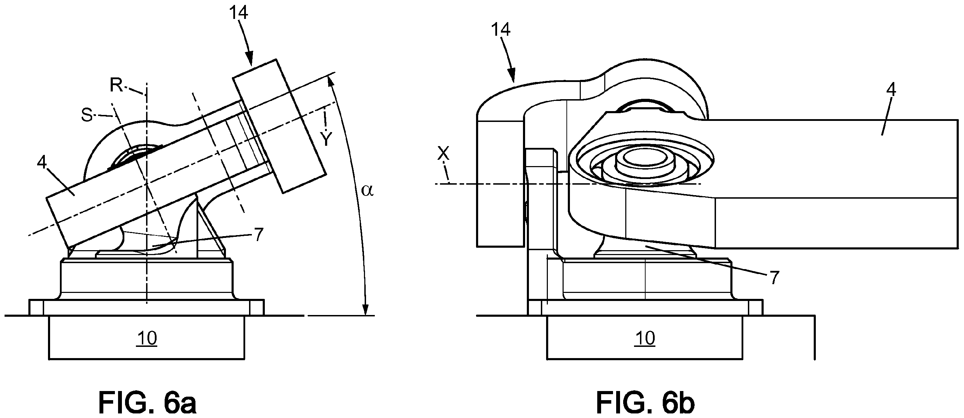

   [Fig. 6a] représente une vue du radiateur dans une quatrième position, également représentée figure 2.
**Fig. 6b**
   [Fig. 6b] représente une vue selon un plan perpendiculaire à celui de la figure 6a.
**Fig. 7**

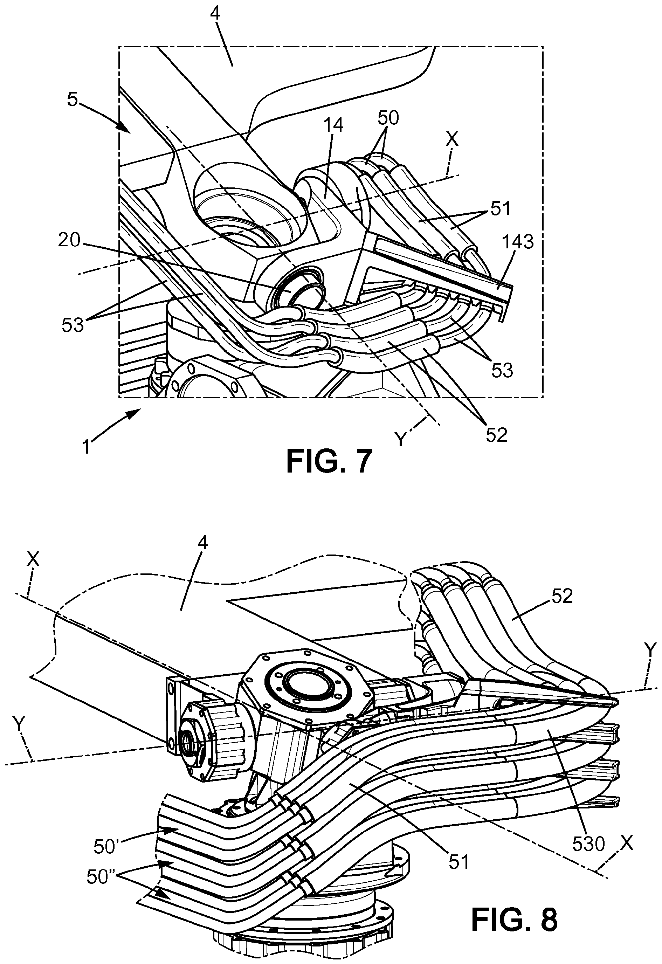

   [Fig. 7] représente un exemple de disposition de conduits de circulation de fluide caloporteur relativement à un radiateur selon un mode de réalisation.
**Fig. 8**
   [Fig. 8] représente un exemple de disposition de conduits de circulation de fluide caloporteur relativement à un radiateur selon un autre mode de réalisation.

### Description des modes de réalisation

Sur la figure 1a, il est représenté, en coupe et de manière schématique, un exemple de réalisation d'un radiateur 1, destiné à être monté en rotation autour d'un axe R de rotation sur une face d'un satellite 2. L'axe R de rotation du radiateur 1 une fois monté sur le satellite 2 est en pratique orienté nord-sud, c'est-à-dire qu'il est perpendiculaire aux faces nord et sud du satellite 1. Toutefois, la face sur laquelle le radiateur 1 est monté peut être n'importe quelle face du satellite 2, et le radiateur 1 peut comprendre un support intermédiaire, éventuellement déployable, permettant de conférer à l'axe R de rotation une orientation nord-sud. Dans un mode de réalisation représenté en figure 2, il s'agit de la face 3 nord du satellite 1. En variante, comme représenté sur la figure 3, il peut également s'agir de la face anti-terre. Le satellite 2 a pour but notamment d'être mis en orbite géostationnaire, autour d'une planète, typiquement la terre T.

Le radiateur 1 comprend un panneau 4, lequel présente au moins une surface radiative 5, sensiblement plane. De préférence, les deux faces 5, 6 opposées du panneau 4 sont des surfaces radiatives. Les surfaces radiatives 5, 6 sont orientées par un même axe S dit de radiation, c'est-à-dire l'axe perpendiculaire aux surfaces radiatives 5, 6. Une première face 5 est dite supérieure, et la deuxième face 6 est dite inférieure.

Comme il sera vu plus loin, l'axe R de rotation et l'axe S de radiation sont inclinés l'un par rapport à l'autre, d'un angle non-nul et différent de 90°. En d'autres termes, l'axe R de rotation n'est pas parallèle aux surfaces 5, 6 radiatives. L'axe R de rotation n'est pas non plus perpendiculaire à ces surfaces.

De préférence et comme représenté schématiquement sur les figures 1a et 1b, le panneau 4 s'étend sur un côté du satellite 2, au-delà de la face du satellite 2 sur laquelle il est monté, de manière à ne pas gêner d'autres équipements du satellite requérant une proximité avec le satellite 2, et à offrir aux faces 5 et 6 un bon facteur de vue, également appelé facteur de support du satellite 2, le radiateur 1 comprend des moyens d'assemblage, lesquels comportent un pied support 7, rigide, c'est-à-dire qu'aucune portion du pied 7 n'est mobile par rapport à une autre portion. Des moyens de pilotage et de motorisation sont prévus pour faire pivoter le pied support 7 autour de l'axe R de rotation, ces moyens comprenant notamment un moteur 10 (représenté schématiquement sur les figures 3a à 6b) adapté pour entrainer en rotation le pied 7 autour de l'axe R.

L'orbite géostationnaire est définie comme se situant à environ 36 000 km d'altitude au-dessus de l'équateur, dans le plan équatorial de la Terre, et d'excentricité nulle par rapport à la Terre. Bien que l'orbite géostationnaire fasse référence à la Terre, le satellite 2 muni du radiateur 1 décrit ici pourra être adapté pour d'autres planètes.

L'orbite géostationnaire, dans le plan équatorial de la Terre, est donc inclinée par rapport à l'écliptique, d'un angle de 23,5°. Ainsi, l'axe de radiation S est incliné d'un angle α de fonctionnement par rapport à l'axe de rotation R, lequel angle α est alors choisi égal à 23,5°. Plus généralement, l'angle α de fonctionnement pourra être choisi en fonction des besoins dans une plage de valeurs comprises entre 0°et 90°, les bornes de la plage étant exclues (*α* ∈] 0 ;90° [).

Le satellite 2 en orbite géostationnaire est orienté de telle manière que ses faces dites nord et sud sont parallèles au plan de l'orbite géostationnaire, et ce tout au long de son fonctionnement. En effet, notamment pour les satellites de télécommunication, les instruments de type antenne sont montés sur le satellite selon une orientation précise, qui doit être conservée. Ainsi, l'orientation du satellite par rapport à la Terre est en général maintenue identique tout au long de son fonctionnement.

L'inclinaison de l'axe S de radiation par rapport à l'axe R de radiation implique que les surfaces radiatives 5, 6 se retrouvent inclinées de l'angle α de fonctionnement par rapport à la face 3 nord du satellite 2. Ainsi, les surfaces radiatives peuvent demeurer parallèles au plan de l'écliptique pour toute rotation du pied support 7 autour de l'axe R de rotation. Leur ensoleillement est alors nul, et leur capacité de réjection thermique est alors maximisée.

L'angle α de fonctionnement est fixe, c'est-à-dire qu'il est déterminé au moment de la conception du radiateur. Il n'est donc pas modifié au cours du fonctionnement du radiateur. Seule la rotation du pied support 7 autour de l'axe R de rotation doit être commandée pour conserver les surfaces radiatives 5, 6 parallèles au plan de l'écliptique. Les moyens d'assemblage sont donc simples à réaliser.

En variante, des moyens de modifications limités (de quelques degrés) de cet angle α de fonctionnement en opération pour compenser une évolution de l'inclinaison de l'orbite peuvent cependant être prévus. Par exemple un dispositif à deux positions pourrait être utilisé. Plus précisément, comme cela sera vu plus loin, ce n'est pas l'angle α de fonctionnement entre l'axe R de rotation et l'axe S de radiation qui est modifié, mais l'angle entre les surfaces radiatives 5, 6 et la face 3 nord du satellite, de sorte que, par compensation, les surfaces radiatives 5, 6 sont ramenées dans le plan de l'écliptique.

Dans un mode de réalisation, le pied support 7 comprend deux portions 8, 9, rectilignes. Une première portion 8 s'étend selon l'axe R de rotation, et la seconde portion 9 s'étend selon l'axe S de radiation. Les deux portions 8, 9 du pied 7 sont donc inclinées l'une par rapport à l'autre selon l'angle α de fonctionnement. La seconde portion 9 peut être dans le prolongement de la première portion 8, de sorte qu'il existe un point de concours entre l'axe R de rotation et l'axe S de rotation à l'interface entre les deux portions 8, 9. En variante, ces portions peuvent être agencées de sorte qu'un point de concours entre l'axe R de rotation et l'axe S de radiation ne se situe pas à l'interface entre les deux portions mais dans un plan du panneau 4, ce qui implique que la base de la deuxième portion, à l'interface avec la première portion, soit légèrement excentrée par rapport à la première portion, comme représenté par exemple sur la figure 1a.

La première portion 8 est montée sur la face support 3 du satellite, par exemple la face nord ou sud, au moyen d'un palier 11, et est reliée aux moyens de pilotage et de motorisation. La première portion 8 s'étend sensiblement perpendiculairement à la face support 3 sur laquelle elle est montée. Par exemple, la bague intérieure du palier est fixée sur le pied 7, et la bague extérieure est fixée sur la face support 3 du satellite. Un boitier 11', fixé à la bague extérieure, recouvre le palier 11 pour le protéger. Lors d'une rotation complète du pied 7 support autour de l'axe R de rotation, la deuxième portion 9 décrit donc un cône, d'angle égal à l'angle α de fonctionnement.

Le panneau 4 est fixé sur la seconde portion 9 du pied 7. En pratique, le panneau 4 surmonte la seconde portion 9, c'est-à-dire qu'il est fixé à l'extrémité libre de la seconde portion 9.

En variante, le pied support 7 peut être courbe. Dans ce cas, la courbe décrite par le pied support 7 comprend au moins une première tangente sensiblement parallèle à l'axe R de rotation et une deuxième tangente inclinée de l'angle α de fonctionnement par rapport à la première tangente. Le panneau 4 est alors monté perpendiculairement à la seconde tangente.

Si le pied support 7 était rigidement fixé au panneau 4, alors pour une rotation complète du pied support 7 autour de l'axe R de rotation, le panneau 4 décrirait une trajectoire circulaire, de rayon correspondant à la distance entre l'axe R de rotation et le point du panneau 4 le plus éloigné de l'axe R de rotation, dans un plan perpendiculaire à l'axe R de rotation. Or, une telle trajectoire peut être gênante pour les autres équipements sur le satellite. Une telle trajectoire limite en outre les dimensions du panneau 4, pour éviter les collisions entre le panneau 4 et le satellite 2 lors de la rotation autour de l'axe R de rotation.

Par conséquent, le radiateur 1 comprend un système 12 de guidage du panneau, adapté pour limiter, et de préférence supprimer, la rotation du panneau autour de l'axe de rotation R lorsque le pied support 7 est entrainé en rotation par les moyens de motorisation 10, tout en permettant au panneau de décrire un mouvement dans lequel la normale au panneau décrit un cône d'angle α autour de l'axe R. Pour ce faire, le panneau 4 est monté pivotant sur la seconde portion 9 du pied 7, autour de l'axe S de radiation. Par exemple, un second palier 13 entre la seconde portion 9 du pied 7 et le panneau 4 permet d'obtenir cette rotation. La bague extérieure du second palier 13 est fixée rigidement au panneau 4 entourant le roulement, la bague intérieure étant bloquée sur le pied support 7.

En outre, le système de guidage 12 comporte un bras de liaison 14 du panneau 4 au satellite, le bras de liaison 14 étant monté pivotant par rapport au satellite autour d'un premier axe X, et pivotant par rapport au panneau 4 autour d'un second axe Y.

A cet effet, le bras de liaison 14 comporte avantageusement un premier palier 15 s'étendant autour de l'axe X et recevant une tige cylindrique 20 solidaire du satellite. Par exemple, la tige cylindrique 20 peut être solidaire, ou formée d'une seule pièce, avec le boitier 11' fixé à la bague extérieure du palier et recouvrant celui-ci. Le bras de liaison 14 comporte en outre un deuxième palier 16 s'étendant autour de l'axe Y et recevant une tige cylindrique 40 solidaire du panneau, cette tige cylindrique pouvant être une protubérance du panneau dédiée à la liaison avec le bras de liaison. Avantageusement, les paliers 15, 16 sont portés aux extrémités du bras de liaison. Le premier axe X et le deuxième axe Y sont coplanaires et concourants, le point de concours de ces axes étant en outre confondu avec un point d'intersection de l'axe de radiation et de l'axe de rotation. Ainsi les axes R, S, X et Y sont tous concourants en un point O. De plus, aucun des axes X et Y n'est parallèle à l'un des axes de rotation R et de radiation S.

Dans un mode de réalisation, le bras de liaison 14 est un bras coudé comprenant deux portions 140, 141 montées solidairement à la bague externe de chaque palier, les portions étant reliées par une portion centrale 142 coudée, éventuellement arrondie. Chaque palier peut se trouver à l'extrémité libre de chaque portion du bras de liaison.

Dans un mode de réalisation, les axes X et Y sont perpendiculaires entre eux. Dans ce cas, les paliers 15, 16 s'étendent perpendiculairement l'un à l'autre, et les portions 140, 141 sont perpendiculaires entre elles. Dans le cas où X et Y sont perpendiculaires entre eux, la rotation du panneau autour de l'axe R est strictement nulle. Dans le cas contraire, il subsiste un mouvement d'oscillation en rotation autour de R d'autant plus important en amplitude que l'angle entre X et Y est faible.

Ce bras coudé comprenant des paliers pouvant être préchargés permet d'obtenir la rigidité nécessaire pour le mécanisme.

Dans un mode de réalisation, le premier axe X s'étend parallèlement à la face support 3 du satellite, et donc perpendiculairement à l'axe de rotation R. Le second axe Y s'étend lui préférablement parallèlement à la direction de la dimension principale du panneau, ce qui limite l'encombrement du radiateur.

Le bras de liaison permet, par ces rotations selon deux axes concourants au niveau du point d'intersection des axes R et S, de contraindre le mouvement du panneau, lors de la rotation du pied support autour de l'axe R de rotation, selon un mouvement conique, dont l'axe de radiation S constitue une génératrice, le panneau étant en chaque point de son mouvement perpendiculaire à l'axe S. De la sorte, le panneau demeure parallèle au plan de l'écliptique, les faces radiatives du panneau étant toujours inclinées par rapport à la face nord du satellite d'un angle α. Cependant, le plan dans lequel cette inclinaison est mesurable change avec la rotation du pied autour de l'axe R de rotation, suivant l'orientation de la seconde portion 9.

On a représenté sur la figure 2, de manière schématique, le satellite 2 en orbite géostationnaire équatorial autour de la terre T dans trois positions différentes. Le plan Pg de l'orbite géostationnaire équatorial du satellite est incliné par rapport au plan Pe de l'écliptique, d'un angle de 23,5° environ.

Les moyens de pilotage et de motorisation sont adaptés pour que la vitesse de rotation du pied suive la rotation de la Terre T. Plus précisément, la Terre T effectue une rotation complète, soit 360°, autour de son axe en une journée dite sidérale, en 23 heures, 56 minutes et 4,1 secondes. En outre la Terre met 24 pour que le Soleil retrouve, par rapport à un même point de la Terre, la même position, la Terre ayant alors effectué une rotation de 360,9856° environ, autour de son axe, définissant ainsi un jour solaire.

Par conséquent, les moyens 10 de pilotage et de motorisation sont réglés pour que le pied support 7 effectue une rotation complète, soit 360° pour garder une orbite géostationnaire, en 23 heures, 56 minutes et 4,1 secondes pour que les surfaces radiatives 5,6 demeurent parallèles au plan Pe de l'écliptique. Le sens de rotation du pied support 7 est l'inverse de celui de la Terre. Ainsi, si la Terre tourne en sens trigonométrique, le pied support 7 tourne dans le sens anti-trigonométrique. La vitesse de rotation du pied support est constante.

Grâce à la rotation du pied 7, autour d'un unique axe, l'axe R de rotation, à partir d'une position initiale dans laquelle les surfaces radiatives 5, 6 sont parallèles au plan Pe de l'écliptique, et à vitesse de rotation constante, le parallélisme de la position initiale est conservé tout au long de l'orbite géostationnaire du satellite 2, sans que des réglages ne soient nécessaires au cours du fonctionnement du satellite 2.

Ainsi on a représenté sur les figures 3a à 6b quatre exemples de positions d'un panneau par rapport au pied support 7, successivement adoptées par le radiateur lors d'une rotation complète du satellite. Sur les figures 3a, 4a, 5a, 6a, la vue du radiateur est une vue selon un plan perpendiculaire au premier axe X. Sur les figures 3b, 4b, 5b, 6b, la vue du radiateur est une vue selon un plan perpendiculaire à la surface support du satellite et perpendiculaire au plan de vue des figures 3a, 4a, 5a, 6a.

Sur les figures 3a et 3b, qui correspondent à la position du satellite par rapport à la Terre représentée la plus à droite sur la figure 2, le panneau présente une inclinaison nulle par rapport au premier axe X mais une inclinaison de l'angle α par rapport à la surface support du panneau, autour de l'axe Y. Sur les figures 5a et 5b, qui correspondent à la position la plus à gauche du satellite sur la figure 2, c'est-à-dire une position du satellite opposé, relativement à la Terre, par rapport à la première position, le panneau présente une inclinaison nulle par rapport au premier axe X mais une inclinaison d'une valeur d'angle α et de sens opposé par rapport à la surface support du panneau, autour de l'axe Y.

Réciproquement, les figures 4a et 4b d'une part, et 6a et 6b d'autre part, correspondent à deux positions opposées du satellite par rapport à la Terre, chaque position étant une position médiane par rapport aux positions des figures 3a et 3b d'une part, et 5a et 5b d'autre part. En particulier, la position représentée sur les figures 4a et 4b correspond sur la figure 2 à la position du milieu du satellite, tandis que la position représentée sur les figures 6a et 6b n'est pas représentée sur la figure 2 car elle se situerait derrière la Terre, à l'opposé du satellite représenté au milieu. Dans ces positions, l'inclinaison du panneau par rapport au deuxième axe Y est nulle, tandis qu'elle est égale à l'angle α dans un sens ou le sens opposé autour de l'axe X.

Toutes les positions du panneau lors d'une révolution du satellite autour de la Terre sont des positions intermédiaires entre ces quatre positions.

Afin de surveiller le positionnement correct du panneau par rapport à l'écliptique, le radiateur peut comprendre en outre au moins un capteur solaire, relié aux moyens 10 de pilotage et de motorisation, de manière à vérifier et/ou à asservir l'orientation du panneau par rapport au Soleil. Le capteur solaire permet de vérifier l'absence d'ensoleillement des surfaces radiatives 5, 6, et de communiquer avec les moyens 10 de pilotage et de motorisation pour éventuellement entreprendre des opérations correctives sur la rotation du pied 7 support.

En référence à la figure 7, le radiateur 1 décrit ci-avant peut également comprendre des moyens de connexion fluidique simplifiés. Le radiateur comprend au moins un circuit de circulation de fluide caloporteur adapté pour faire circuler un fluide caloporteur en boucle fermée entre un équipement du satellite et le panneau 4 du radiateur, et comprend à cet égard un ou plusieurs conduits 50 de fluide caloporteur. Or, la conception de la disposition du ou des conduits de fluide caloporteur doit tenir compte du mouvement du panneau 1, de la pression du fluide caloporteur et de la section de ces conduits pour faire passer un débit suffisant pour assurer le refroidissement des équipements du satellite.

A cet égard, chaque conduit de fluide caloporteur 50 est avantageusement adapté pour s'étendre du satellite au panneau en contournant le bras de liaison, c'est-à-dire en longeant une face extérieur du bras de liaison, et en présentant :
- une première portion souple 51 située en regard du premier axe de rotation X, s'étendant transversalement à celui-ci, de manière à pouvoir fléchir autour d'un premier point de flexion situé sur le premier axe de rotation, et
- une deuxième portion souple 52 s'étendant en regard du deuxième axe de rotation Y, s'étendant transversalement à celui-ci, de sorte à pouvoir fléchir autour d'un deuxième point de flexion situé sur le deuxième axe de rotation.

Chaque point de flexion se situe donc sur un axe de rotation X,Y du bras de liaison 14, du côté opposé du panneau par rapport au bras de liaison. Le conduit est donc adapté pour pouvoir se déformer avec le mouvement du panneau. Un conduit souple de circulation de fluide caloporteur dans le domaine spatial est typiquement réalisé par un conduit corrugué, c'est-à-dire ondulé de sorte à être souple en flexion. Pour empêcher une élongation de ce conduit corrugué sous la pression du fluide circulant à l'intérieur, un manchon tressé entoure le conduit corrugué et empêche toute variation de longueur du conduit.

Ainsi, le fait d'aligner les portions souples 51, 52 des conduits de fluide caloporteur, qui sont réalisées de la même façon, avec les axes de rotation respectivement X,Y, permet de les soumettre à un mouvement de flexion pure, et à aucune variation de longueur.

Les portions souples 51, 52 peuvent, au lieu d'être corruguées, présenter une configuration hélicoïdale, conférant à ces portions une souplesse en flexion.

Typiquement, pour la circulation en boucle fermée du fluide caloporteur des équipements du satellite vers le panneau, puis du panneau vers les équipements du satellite, les conduits de circulation de fluide caloporteur sont prévus par paires, chacun correspondant à un sens de circulation de fluide. Par conséquent, dans le cas où plusieurs conduits 50 doivent être disposés en contournant ou en entourant le bras de liaison comme décrit ci-avant, les conduits sont avantageusement disposés de sorte que toutes les premières portions souples 51 des conduits soient toutes juxtaposées les unes aux autres, c'est-à-dire disposées côte à côte et s'étendant toutes transversalement au premier axe de rotation, , et toutes les deuxièmes portions souples 52 des conduits soient également juxtaposées ou disposées côte à côte, transversalement au deuxième axe de rotation Y.

Dans un mode de réalisation, chaque conduit de fluide caloporteur comprend des portions rigides 53 s'étendant de part et d'autre de chaque portion souple, et notamment une portion intermédiaire 530 rigide s'étendant entre les deux portions souples 51, 52. Si le bras de liaison 14 prend la forme d'un bras coudé à 90°, cette portion rigide 530 est également coudée à 90° pour longer le bras de liaison.

En variante, la portion intermédiaire 530 de conduit de fluide caloporteur reliant entre elle la première portion 51 et la deuxième portion 52 souples peut être souple également. Autrement dit, chaque conduit de fluide caloporteur 50 peut alors comprendre une portion souple continue comprenant la première portion 51 située en regard de l'axe X, la deuxième portion 52 située en regard de l'axe Y, et une portion souple 530 intermédiaire reliant ces deux portions.

Dans ce cas, et en référence à la figure 8, l'ensemble des conduits 50 de fluide caloporteur peut comprendre un ou plusieurs conduits de fluide 50' alignés de sortes que les premières portions 51 soient juxtaposées sur l'axe X et les deuxièmes portions 52 soient juxtaposées sur l'axe Y, et peut comprendre en outre des deuxièmes conduits de fluide 50" qui sont respectivement superposés aux premiers conduits 50', dans une direction perpendiculaire au plan défini par les axes X et Y. Les deuxièmes conduits de fluide 50" comprenant une portion souple continue superposée avec la première portion souple 51, la deuxième portion souple et la portion intermédiaire, souple ou rigide, d'un premier conduit 50'. Par exemple, deux ou trois niveaux de superpositions peuvent ainsi être envisagés. Le fait que les conduits 50" soient décalés par rapport aux axes X et Y implique une déformation plus importante lors des mouvements du panneau, mais cette déformation est permise par la présence de la portion souple continue.

Avantageusement, le bras de liaison 14 peut comprendre un support 143 d'au moins un conduit de fluide 50, et de préférence d'un nombre pair de conduits 50, par exemple entre deux et huit conduits. Dans les modes de réalisation représentés sur les figures 7 et 8, le bras de liaison 14 est coudé à 90° et le support 143 est rapporté sur le bras de liaison au niveau du coude, en s'étendant vers l'extérieur du bras de liaison. Le support est adapté pour être assemblé de chaque conduit s'étendant entre les deux portions souples 51, 52, et comporte par exemple à cet égard un logement pour chaque conduit.

Avantageusement, le radiateur 1 peut prendre une position repliée dans laquelle le panneau est maintenu parallèle à une face du satellite, par exemple la face support 3 comme la face nord, et il est amené ensuite en position opérationnelle. A cet égard, le déploiement peut être réalisé par le même moteur que celui qui entraîne en rotation le pied, par le biais d'un dispositif de transmission de mouvement, par exemple une boîte de vitesses munie de cames, ou par un moteur distinct de celui qui réalise la rotation du pied.

Bien que les figures décrites précédemment ne représentent qu'un seul radiateur, monté sur une face support comme la face nord, le satellite peut comprendre au moins un deuxième radiateur monté par exemple sur la face sud et fonctionnant de manière identique. De plus, selon les dimensions des panneaux radiatifs, une même face peut aussi comprendre deux radiateurs.

## Revendications

1. Satellite (2) apte à être mis à poste en orbite géostationnaire autour d'une planète dans un plan incliné par rapport au plan de l'écliptique, comprenant un radiateur, le radiateur (1) comprenant :
- au moins un panneau (4) présentant au moins une surface radiative (5,6) s'étendant perpendiculairement par rapport à un axe de radiation (S), le panneau étant monté pivotant par rapport audit axe de radiation (S),
- un pied support (7) portant le panneau (4), et
- un moteur (10) adapté pour faire pivoter le pied support (7) autour d'un axe de rotation (R),
dans lequel l'axe de radiation (S) et l'axe de rotation (R) sont inclinés l'un par rapport à l'autre d'un angle de fonctionnement (α) correspondant à l'angle d'inclinaison du plan de l'orbite du satellite par rapport au plan de l'écliptique, de sorte que pour toute rotation du pied support (7) autour de l'axe de rotation (R), la surface radiative (5,6) demeure parallèle au plan de l'écliptique,
et dans lequel le radiateur (1) comprend en outre un système de guidage (12) du panneau (4) limitant la rotation du panneau autour de l'axe de rotation (R), de manière à maintenir le panneau dans une orientation donnée par rapport au satellite,
**caractérisé en ce que** le système de guidage (12) du panneau comprend un bras de liaison (14) du panneau au satellite monté pivotant par rapport au satellite (2) autour d'un premier axe (X), et monté pivotant par rapport au panneau (4) autour d'un second axe (Y) concourant au premier axe au niveau d'un point de concours (O) confondu avec un point d'intersection entre l'axe de radiation (S) et l'axe de rotation (R).

2. Satellite (2) selon la revendication 1, dans lequel le bras de liaison (14) comprend à chaque extrémité un palier (15, 16) s'étendant respectivement autour du premier axe (X) et du second axe (Y).

3. Satellite (2) selon l'une des revendications 1 ou 2, dans lequel le premier axe (X) et le second axe (Y) sont perpendiculaires, et le bras de liaison (14) est un bras coudé comprenant deux portions (141, 142) perpendiculaires entre elles.

4. Satellite (2) selon l'une des revendications 1 à 3, dans lequel le premier axe (X) s'étend parallèlement à une face support (3) du satellite sur laquelle est monté le radiateur (1).

5. Satellite (2) selon l'une des revendications précédentes, dans lequel le panneau (4) présente une forme sensiblement rectangulaire présentant une dimension principale dans une première direction, et le second axe (Y) de rotation du bras de liaison (14) par rapport au panneau (4) est parallèle à la première direction.

6. Satellite (2) selon l'une des revendications précédentes, dans lequel le radiateur (1) comprend en outre un circuit de circulation de fluide caloporteur adapté pour faire circuler un fluide caloporteur en boucle fermée entre un équipement du satellite et le panneau du radiateur, dans lequel le circuit de circulation de fluide caloporteur comprend au moins un premier conduit (50) de fluide caloporteur comprenant au moins :
- une première portion souple (51) s'étendant transversalement au premier axe de rotation (X) de sorte à pouvoir fléchir autour d'un premier point de flexion situé sur le premier axe de rotation, et
- une deuxième portion souple (52) s'étendant transversalement au second axe de rotation (Y) de sorte à pouvoir fléchir autour d'un deuxième point de flexion situé sur le deuxième axe de rotation.

7. Satellite (2) selon la revendication précédente, dans lequel chaque conduit (50) de fluide caloporteur comprend en outre des portions rigides (53) s'étendant de part et d'autre de chaque portion souple.

8. Satellite (2) selon la revendication 6, dans lequel chaque conduit (50) de fluide caloporteur comprend une portion souple continue comprenant la première portion souple (51), la deuxième portion souple (52), et une portion souple intermédiaire (530) reliant celles-ci.

9. Satellite (2) selon l'une des revendications 6 à 8, dans lequel le bras de liaison (14) comprend en outre un support (143) d'au moins un conduit (50) de fluide caloporteur.

10. Satellite (2) selon l'une des revendications 6 à 9, dans lequel le radiateur (1) comprend une pluralité de conduits (50) de fluide caloporteur, chaque conduit (50) comprenant une première (51) et une deuxième (52) portions souples, dans lequel les premières portions souples (51) d'au moins deux conduits (50) sont juxtaposées les unes aux autres transversalement au premier axe de rotation (X), et les deuxièmes portions souples (51) d'au moins deux conduits (50) sont juxtaposées les unes aux autres transversalement au deuxième axe de rotation (Y).

11. Satellite (2) selon l'une des revendications 6 à 10, dans lequel le satellite comprend en outre au moins un deuxième conduit (50") de fluide caloporteur, superposé au premier conduit dans une direction perpendiculaire à un plan défini par le premier et le deuxième axe de rotation, le deuxième conduit (50") comprenant une portion souple continue superposée à la première portion souple (51), la deuxième portion souple (52), et une portion (530) intermédiaire reliant celles-ci du premier conduit.

12. Satellite (2) selon l'une des revendications précédentes, dans lequel le pied support (7) comprend deux portions (8,9) à savoir :
- une première portion (8) apte à être montée sur la face support (3) du satellite, et
- une seconde portion (9) sur laquelle le panneau (4) est monté,
le panneau (4) étant monté sur la seconde portion (9) par l'intermédiaire d'un palier (13) pour autoriser la rotation du panneau autour de l'axe de radiation (S).

13. Satellite (2) selon la revendication 12, dans lequel les deux portions (8,9) du pied support (7) sont rectilignes, la première portion (8) s'étendant selon l'axe de rotation (R) et la deuxième portion s'étendant selon l'axe de radiation (S).

14. Satellite (2) selon l'une des revendications précédentes, dans lequel l'angle de fonctionnement (α) est de 23,5°.

15. Satellite (2) selon l'une des revendications précédentes, dans lequel le radiateur (1) est monté sur une face support (3) du satellite, le pied support (7) du radiateur étant fixé sur le satellite de sorte que l'axe de rotation (R) est perpendiculaire à une face de référence du satellite, la face de référence étant une face nord ou une face sud du satellite.

## Patentansprüche

1. Satellit (2), der dazu geeignet ist, in einer geostationären Umlaufbahn um einen Planeten in einer zur Ebene der Ekliptik geneigten Ebene stationiert zu sein, umfassend einen Radiator, wobei der Radiator (1) Folgendes umfasst:
- mindestens eine Platte (4) mit mindestens einer Strahlungsfläche (5, 6), die sich senkrecht zu einer Strahlungsachse (S) erstreckt, wobei die Platte in Bezug auf die Strahlungsachse (S) drehbar montiert ist,
- einen Stützfuß (7), der die Platte (4) trägt, und
- einen Motor (10), der dazu ausgelegt ist, den Stützfuß (7) um eine Drehachse (R) zu drehen,
wobei die Strahlungsachse (S) und die Drehachse (R) relativ zueinander um einen Arbeitswinkel (α) geneigt sind, der dem Neigungswinkel der Umlaufbahnebene des Satelliten in Bezug auf die Ebene der Ekliptik entspricht, sodass bei jeder Drehung des Stützfußes (7) um die Drehachse (R) die Strahlungsfläche (5, 6) parallel zur Ebene der Ekliptik bleibt,
und wobei der Radiator (1) ferner ein System (12) zum Führen der Platte (4) umfasst, das die Drehung der Platte um die Drehachse (R) begrenzt, um die Platte in einer gegebenen Ausrichtung in Bezug auf den Satelliten zu halten,
**dadurch gekennzeichnet, dass** das System (12) zum Führen der Platte einen Arm (14) zum Verbinden der Platte mit dem Satelliten umfasst, der in Bezug auf den Satelliten (2) um eine erste Achse (X) drehbar montiert ist und der in Bezug auf die Platte (4) um eine zweite Achse (Y) drehbar montiert ist, die mit der ersten Achse im Bereich eines Knotenpunkts (O) zusammenfällt, der mit einem Schnittpunkt zwischen der Strahlungsachse (S) und der Drehachse (R) zusammenfällt.

2. Satellit (2) nach Anspruch 1, wobei der Verbindungsarm (14) an jedem Ende ein Lager (15, 16) umfasst, das sich um die erste Achse (X) bzw. die zweite Achse (Y) erstreckt.

3. Satellit (2) nach einem der Ansprüche 1 oder 2, wobei die erste Achse (X) und die zweite Achse (Y) senkrecht sind und der Verbindungsarm (14) ein abgewinkelter Arm ist, der zwei zueinander senkrechte Abschnitte (141, 142) umfasst.

4. Satellit (2) nach einem der Ansprüche 1 bis 3, wobei sich die erste Achse (X) parallel zu einer Stützfläche (3) des Satelliten erstreckt, an der der Radiator (1) montiert ist.

5. Satellit (2) nach einem der vorangehenden Ansprüche, wobei die Platte (4) eine im Wesentlichen rechteckige Form mit einer Hauptabmessung in einer ersten Richtung aufweist und wobei die zweite Drehachse (Y) des Verbindungsarms (14) in Bezug auf die Platte (4) parallel zur ersten Richtung ist.

6. Satellit (2) nach einem der vorangehenden Ansprüche, wobei der Radiator (1) ferner einen Kreislauf zur Zirkulation eines Wärmeträgerfluids umfasst, der dazu ausgelegt ist, ein Wärmeträgerfluid in einem geschlossenen Kreislauf zwischen einer Ausrüstung des Satelliten und der Platte des Radiators zirkulieren zu lassen, wobei der Kreislauf zur Zirkulation eines Wärmeträgerfluids mindestens eine erste Wärmeträgerfluidleitung (50) umfasst, die zumindest Folgendes umfasst:
- einen ersten flexiblen Abschnitt (51), der sich quer zur ersten Drehachse (X) erstreckt, sodass er sich um einen ersten Biegepunkt, der sich auf der ersten Drehachse befindet, biegen kann, und
- einen zweiten flexiblen Abschnitt (52), der sich quer zur zweiten Drehachse (Y) erstreckt, sodass er sich um einen zweiten Biegepunkt, der sich auf der zweiten Drehachse befindet, biegen kann.

7. Satellit (2) nach dem vorangehenden Anspruch, wobei jede Wärmeträgerfluidleitung (50) ferner starre Abschnitte (53) umfasst, die sich auf beiden Seiten jedes flexiblen Abschnitts erstrecken.

8. Satellit (2) nach Anspruch 6, wobei jede Wärmeträgerfluidleitung (50) einen durchgehenden flexiblen Abschnitt umfasst, der den ersten flexiblen Abschnitt (51), den zweiten flexiblen Abschnitt (52) und einen diese Abschnitte verbindenden flexiblen Zwischenabschnitt (530) umfasst.

9. Satellit (2) nach einem der Ansprüche 6 bis 8, wobei der Verbindungsarm (14) ferner einen Träger (143) für mindestens eine Wärmeträgerfluidleitung (50) umfasst.

10. Satellit (2) nach einem der Ansprüche 6 bis 9, wobei der Radiator (1) mehrere Wärmeträgerfluidleitungen (50) umfasst, wobei jede Leitung (50) einen ersten (51) und einen zweiten flexiblen Abschnitt (52) umfasst, wobei die ersten flexiblen Abschnitte (51) von mindestens zwei Leitungen (50) quer zur ersten Drehachse (X) nebeneinander angeordnet sind und die zweiten flexiblen Abschnitte (51) von mindestens zwei Leitungen (50) quer zur zweiten Drehachse (Y) nebeneinander angeordnet sind.

11. Satellit (2) nach einem der Ansprüche 6 bis 10, wobei der Satellit ferner mindestens eine zweite Wärmeträgerfluidleitung (50") umfasst, die in einer Richtung senkrecht zu einer durch die erste und die zweite Drehachse definierten Ebene über der ersten Leitung liegt, wobei die zweite Leitung (50") einen durchgehenden flexiblen Abschnitt umfasst, der über dem ersten flexiblen Abschnitt (51), dem zweiten flexiblen Abschnitt (52) und einem diese Abschnitte verbindenden Zwischenabschnitt (530) der ersten Leitung liegt.

12. Satellit (2) nach einem der vorangehenden Ansprüche, wobei der Stützfuß (7) zwei Abschnitte (8, 9) umfasst, und zwar:
- einen ersten Abschnitt (8), der dazu geeignet ist, an der Stützfläche (3) des Satelliten montiert zu sein, und
- einen zweiten Abschnitt (9), an dem die Platte (4) montiert ist,
wobei die Platte (4) über ein Lager (13) am zweiten Abschnitt (9) montiert ist, um die Drehung der Platte um die Strahlungsachse (S) zu ermöglichen.

13. Satellit (2) nach Anspruch 12, wobei die beiden Abschnitte (8, 9) des Stützfußes (7) geradlinig sind, wobei der erste Abschnitt (8) sich entlang der Drehachse (R) erstreckt und der zweite Abschnitt sich entlang der Strahlungsachse (S) erstreckt.

14. Satellit nach einem der vorangehenden Ansprüche, wobei der Arbeitswinkel (α) 23,5° beträgt.

15. Satellit (2) nach einem der vorangehenden Ansprüche, wobei der Radiator (1) an einer Stützfläche (3) des Satelliten montiert ist, wobei der Stützfuß (7) des Radiators so am Satelliten befestigt ist, dass die Drehachse (R) senkrecht zu einer Bezugsfläche des Satelliten verläuft, wobei die Bezugsfläche eine Nord- oder eine Südseite des Satelliten ist.

## Claims

1. Satellite (2) capable of being stationed in geostationary orbit around a planet in a plane that is inclined relative to the ecliptic plane, comprising a radiator, the radiator (1) comprising:
- at least one panel (4) having at least one radiative surface (5,6) extending perpendicularly to a radiation axis (S), the panel being mounted so as to pivot relative to said radiation axis (S),
- a mounting foot (7) carrying the panel (4), and
- a motor (10) suitable for rotating the mounting foot (7) about a rotation axis (R),
wherein the radiation axis (S) and the rotation axis (R) are tilted relative to each other by an operating angle (α) corresponding to the angle of inclination of the satellite's orbital plane relative to the ecliptic plane, such that for any rotation of the mounting foot (7) about the rotation axis (R), the radiative surface (5,6) remains parallel to the ecliptic plane,
and wherein the radiator (1) further comprises a guidance system (12) for the panel (4), limiting rotation of the panel about the rotation axis (R), so as to maintain the panel in a given orientation relative to the satellite,
**characterized in that** the panel guidance system (12) comprises a connecting arm (14) connecting the panel to the satellite, mounted so as to pivot relative to the satellite (2) about a first axis (X), and
mounted so as to pivot relative to the panel (4) about a second axis (Y) concurrent with the first axis at a meeting point (O) coincident with a point of intersection between the radiation axis (S) and the rotation axis (R).

2. Satellite (2) according to claim 1, wherein the connecting arm (14) comprises a bearing (15, 16) at each end, extending respectively around the first axis (X) and the second axis (Y).

3. Satellite (2) according to one of claims 1 or 2, wherein the first axis (X) and the second axis (Y) are perpendicular, and the connecting arm (14) is a bent arm comprising two mutually perpendicular portions (141, 142).

4. Satellite (2) according to one of claims 1 to 3, wherein the first axis (X) extends parallel to a support face (3) of the satellite on which the radiator (1) is mounted.

5. Satellite (2) according to one of the preceding claims, wherein the panel (4) has a substantially rectangular shape having a main dimension in a first direction, and the second rotation axis (Y) of the connecting arm (14) relative to the panel (4) is parallel to the first direction.

6. Satellite (2) according to one of the preceding claims, further comprising a coolant circulation circuit suitable for circulation of a coolant in a closed loop between a piece of equipment of the satellite and the panel of the radiator, wherein the coolant circulation circuit comprises at least a first coolant pipe (50) comprising at least:
- a first flexible portion (51) extending transversely to the first rotation axis (X) so as to be able to bend around a first bending point located on the first rotation axis, and
- a second flexible portion (52) extending transversely to the second rotation axis (Y) so as to be able to bend around a second bending point located on the second rotation axis.

7. Satellite (2) according to the preceding claim, wherein each coolant pipe (50) further comprises rigid portions (53) extending on either side of each flexible portion.

8. Satellite (2) according to claim 6, wherein each coolant pipe (50) comprises a continuous flexible portion comprising the first flexible portion (51), the second flexible portion (52), and an intermediate flexible portion (530) connecting these.

9. Satellite (2) according to one of claims 6 to 8, wherein the connecting arm (14) further comprises a support (143) for at least one coolant pipe (50).

10. Satellite (2) according to one of claims 6 to 9, comprising a plurality of coolant pipes (50), each pipe (50) comprising a first (51) and a second (52) flexible portion, wherein the first flexible portions (51) of at least two pipes (50) are placed next to each other transversely to the first rotation axis (X), and the second flexible portions (51) of at least two pipes (50) are placed next to each other transversely to the second rotation axis (Y).

11. Satellite (2) according to one of claims 6 to 10, further comprising at least a second coolant pipe (50"), superimposed on the first pipe in a direction perpendicular to a plane defined by the first and the second rotation axis, the second pipe (50") comprising a continuous flexible portion superimposed on the first flexible portion (51), the second flexible portion (52), and an intermediate portion (530) connecting those of the first pipe.

12. Satellite (2) according to one of the preceding claims, wherein the mounting foot (7) comprises two portions (8,9), namely:
- a first portion (8) suitable for mounting on the support face (3) of the satellite, and
- a second portion (9) on which the panel (4) is mounted,
the panel (4) being mounted on the second portion (9) by means of a bearing (13) to allow rotation of the panel about the radiation axis (S).

13. Satellite (2) according to claim 12, wherein the two portions (8,9) of the mounting foot (7) are straight, the first portion (8) extending along the rotation axis (R) and the second portion extending along the radiation axis (S).

14. Satellite (2) according to one of the preceding claims, wherein the operating angle (α) is 23.5°.

15. Satellite (2) according to any of the preceding claims, wherein the radiator (1) is mounted on a support face (3) of the satellite, the mounting foot (7) of the radiator being fixed on the satellite so that the rotation axis (R) is perpendicular to a reference face of the satellite, the reference face being a north face or a south face of the satellite.
